# EUROPÄISCHE PATENTANMELDUNG

(11) **EP 0 622 649 A1**
(43) Veröffentlichungstag der Anmeldung: **02.11.1994**
(21) Anmeldenummer: 94104468.7
(22) Anmeldetag: 22.03.1994
(51) Int. Cl.: G02B 6/28, G02B 6/42

(54) **Optischer Koppler mit Anzapfstelle**

(30) Priorität: 30.03.1993 DE 4310291
(71) Anmelder: Alcatel SEL Aktiengesellschaft, D-70435 Stuttgart (DE)
(72) Erfinder: Rossberg, Rolf, D-71701 Schwieberdingen (DE); Fritschi, Rainer, D-70825 Korntal-Münchingen (DE); Otterbach, Jürgen, D-71229 Leonberg (DE); Heidemann, Rolf, Dr., D-71732 Tamm (DE)
(74) Vertreter: Pohl, Herbert, Dipl.-Ing

(57) **Zusammenfassung**

Ein aus optischen Fasern hergestellter Koppler (1) ist mit einer Anzapfstelle zur Detektion des Lichtes versehen, das im Betrieb am Kopplerausgang in einer der Fasern geführt wird. Der in ein Gehäuse (2) eingebettete Koppler (1) hat dafür am Kopplerausgang einen die optische Faser (Anschluß 6) umschließenden Linsenkörper (8) und einen auf den Linsenkörper (8) ausgerichteten Detektor (9). Mit diesem wird während des Kopplerbetriebes über die Primärbeschichtung der optischen Faser durch den Linsenkörper (8) abgestrahltes Verlustlicht aufgenommen und vom Detektor (9) einer elektrischen Auswertung zugeleitet.

## Beschreibung

Die Erfindung betrifft einen optischen Koppler der im Oberbegriff des Anspruchs 1 näher bezeichneten Ausführung.

Solche Koppler werden insbesondere in Systemen der optischen Nachrichtentechnik verwendet, beispielsweise in faseroptischen Verstärkern. Diese sind in optische Übertragungsstrecken eingefügt und verstärken das in einer Übertragungsleitung geführte Signallicht. Um die Lichtleistung steuern zu können, ist es erwünscht, z.B. die Eingangs-, Ausgangs- oder Pumpleistung des Verstärkers zu messen.

Aus zwei Artikeln der Zeitschrift "Journal of LIGHTWAVE TECHNOLOGY", Vol. 9, No. 2, Februar 1991, Seiten 261 bis 265 und Seiten 291 bis 296 sind faseroptische Verstärker bekannt, bei denen das Signal- oder Pumplicht am Ende eines freien Zweiges der Ausgangsseite des Pumpkopplers detektiert wird. Je nach verwendetem Pumpkoppler kann es dabei zu einer starken Polarisationsabhängigkeit des Lichtes kommen.

Der Erfindung liegt die Aufgabe zugrunde, einen aus optischen Fasern bestehenden Koppler mit einer Einrichtung zum Überwachen des im Betrieb am Kopplerausgang in der Faser geführten Lichtes anzugeben. Diese Aufgabe wird erfindungsgemäß mit den im Anspruch 1 angegebenen Merkmalen gelöst. In Unteransprüchen sind Ausgestaltungen des Gegenstandes des Anspruchs 1 angegeben. Erzielbare Vorteile sind der Beschreibung zu entnehmen.

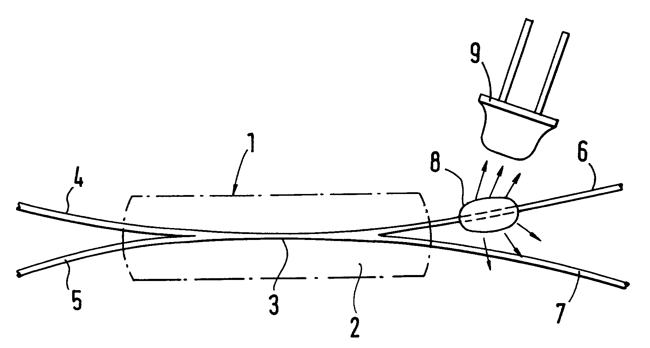

Die Erfindung wird anhand eines in einer Zeichnung dargestellten Ausführungsbeispieles wie folgt näher erläutert. Die Zeichnung zeigt einen optischen Koppler mit einer Einrichtung zur Detektion des abgestrahlten Verlustlichtes.

In der Zeichnung ist der optische Koppler insgesamt mit 1 bezeichnet. Er besteht aus einer in ein schematisch dargestelltes Gehäuse 2 eingebetten Koppelzone 3 und mehreren, an zwei diametralen Seiten aus dem Gehäuse 2 hervorstehenden optischen Fasern. Die Fasern können Ein- oder Mehrmodenfasern aus Quarzglas, Borosilikatglas oder polymere optische Fasern (POF) aus Kunststoff und der damit hergestellte Koppler 1 ein Anschliff- oder Verschmelzkoppler sein. Bei dem dargestellten Ausführungsbeispiel handelt es sich um eine wellenlängenselektive Ausführung in X-Konfiguration mit zwei eingangsseitigen Anschlüssen 4, 5 und zwei ausgangsseitigen Anschlüssen 6, 7.

Die Einrichtung zum Überwachen des Lichtes am Koppler 1 besteht aus einem am Kopplerausgang in geringem Abstand zum Gehäuse 2 die primärbeschichtete optische Faser eines Licht führenden Anschlusses 6 einschließenden Linsenkörper 8 und einem auf diesen ausgerichteten Detektor 9.

Im Gegensatz zu dem im anderen Zweig (Anschluß 7) vorhandenen Restlicht ist das im Kopplerzweig des erstgenannten Anschlusses 6 vereinigte Licht i.a. nicht von der Polarisationsrichtung abhängig. Je nach Wellenlänge des Lichtes, das detektiert werden soll, können passende Photodioden (Detektor 9) ausgewählt oder vor diese geeignete Filter vorgesetzt werden.

Der Linsenkörper 8 ist aus einem transparenten Kunststoff hergestellt, der den gleichen oder besser noch einen höheren Brechungsindex als die Primärbeschichtung der optischen Faser (Anschluß 6) hat. Zur Herstellung des Linsenkörpers 8 eignet sich z.B. ein auf den Anschluß 6 gegebener Tropfen eines aushärtbaren Klebers und als Detektor 9 kann beispielsweise eine großflächige Photodiode verwendet werden. Koppler 1 mit Gehäuse 2, Linsenkörper 8 und Detektor 9 bilden vorzugsweise eine mechanisch fest miteinander verbundene Einheit im Sinne eines für sich allein handhabbaren Bauteils.

Wird das Bauteil in einem optischen Verstärker mit gleicher Laufrichtung von Signal- und Pumplicht eingesetzt, so wird das Signallicht am Eingang des Verstärkers mit dem Pumplicht über den Koppler 1 vereinigt. Beim Betrieb des Verstärkers entstehen jedoch im Koppler 1 nicht vermeidbare Verluste, die bis zu 0,5 dB betragen können. Das Verlustlicht wird daher zwangsläufig an den ausgangsseitigen Anschlüssen 6, 7 des Kopplers 1 über die Primärbeschichtung der Fasern abgestrahlt. Es wurde festgestellt, daß dies auch bei Licht mit einer Wellenlänge von 1550 nm bis zu mehreren Zentimetern Faserlänge noch der Fall ist. Ein Teil dieses Verlustlichtes, das von der in der Faser geführten Lichtmenge nur wenige Prozente beträgt, wird im Linsenkörper 8 gesammelt, weiter abgestrahlt, vom Detektor 9 aufgenommen und von diesem einer elektrischen Auswertung zugeleitet. Mit Hilfe des Bauteils kann daher überwacht werden, ob ein Lichtsignal vorhanden ist, oder es läßt gegebenenfalls Rückschlüsse darauf zu, wie groß die übertragene optische Leistung in der mit dem Bauteil verbundenen Faserstrecke ist.

## Patentansprüche

1. Optischer Koppler mit einer in ein Gehäuse eingebetteten Koppelzone und mehreren, auf zwei diametralen Seiten aus dem Gehäuse hervorstehenden optischen Fasern, die Anschlüsse für ankommende und abgehende Lichtwellenleiter bilden,
**dadurch gekennzeichnet,** daß an dem Licht führenden Anschluß (6) des Kopplerausgangs in geringem Abstand zum Gehäuse (2) ein die optische Faser umschließender Linsenkörper (8) und ein auf den Linsenkörper (8) ausgerichteter Detektor (9) angeordnet ist.

2. Optischer Koppler nach Anspruch 1, dadurch gekennzeichnet, daß der Koppler (1) ein aus Ein- oder Mehrmodenfasern aus Quarzglas, Borosilikatglas oder Kunststoff hergestellter Anschliffkoppler oder ein Verschmelzkoppler ist.

3. Optischer Koppler nach Anspruch 1, dadurch gekennzeichnet, daß der Linsenkörper (8) ein ausgehärteter Tropfen eines Klebers ist, der einen höheren Brechungsindex als die Primärbeschichtung der Faser (Anschluß 6) hat.

4. Optischer Koppler nach Anspruch 1, dadurch gekennzeichnet, daß das Gehäuse (2), der Linsenkörper (8) und der Detektor (9) mechanisch fest miteinander verbunden sind.
